(19) Europäisches Patentamt / European Patent Office / Office européen des brevets

(11) **EP 3 146 300 B1**

(12) **FASCICULE DE BREVET EUROPEEN**

(45) Date de publication et mention de la délivrance du brevet:
**21.12.2022 Bulletin 2022/51**

(21) Numéro de dépôt: **15728914.1**

(22) Date de dépôt: **18.05.2015**

(51) Classification Internationale des Brevets (IPC):
**G01J 3/46** *(2006.01)*

(52) Classification Coopérative des Brevets (CPC):
**G01J 3/462; G01J 3/463**

(86) Numéro de dépôt international:
**PCT/FR2015/051288**

(87) Numéro de publication internationale:
**WO 2015/177447 (26.11.2015 Gazette 2015/47)**

(54) **PROCÉDÉ DE DÉTERMINATION DE CARACTÉRISTIQUES COLORIMÉTRIQUES EN RÉFLEXION D'UN FILTRE INTERFÉRENTIEL, PROCÉDÉ DE DÉPÔT D'UN TEL FILTRE INTERFÉRENTIEL ET ENSEMBLE FORMÉ D'UN FILTRE INTERFÉRENTIEL ET D'UN OBJET**

VERFAHREN ZUR BESTIMMUNG VON REFLEKTIERTEN FARBEIGENSCHAFTEN EINES INTERFERENZFILTERS, VERFAHREN ZUR ABSCHEIDUNG SOLCH EINES INTERFERENZFILTERS UND ANORDNUNG AUS EINEM INTERFERENZFILTER UND EINEM OBJEKT

METHOD FOR DETERMINING COLOUR CHARACTERISTICS REFLECTED BY AN INTERFERENCE FILTER, METHOD FOR DEPOSITING SUCH AN INTERFERENCE FILTER, AND ASSEMBLY FORMED BY AN INTERFERENCE FILTER AND AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2014 FR 1454475**

(43) Date de publication de la demande:
**29.03.2017 Bulletin 2017/13**

(73) Titulaire: **Essilor International**
**94220 Charenton-le-Pont (FR)**

(72) Inventeurs:
- **ARROUY, Frédéric**
  **94220 Charenton Le Pont (FR)**
- **DE AYGUAVIVES, Francisco**
  **94220 Charenton Le Pont (FR)**

(74) Mandataire: **Jacobacci Coralis Harle**
**32, rue de l'Arcade**
**75008 Paris (FR)**

(56) Documents cités:
**FR-A1- 2 838 373    FR-A1- 2 896 045**

**Description**

DOMAINE TECHNIQUE AUQUEL SE RAPPORTE L'INVENTION

La présente invention concerne de manière générale les filtres interférentiels (réalisés sous forme d'empilements interférentiels) déposés par exemple sur un article d'optique, tel qu'une lentille ophtalmique.
Elle concerne plus particulièrement un procédé de détermination de caractéristiques colorimétriques en réflexion d'un filtre interférentiel.
La présente invention concerne également un procédé de dépôt d'un filtre interférentiel sur un article d'optique, ainsi qu'un ensemble formé d'un filtre interférentiel et d'un objet.

ARRIERE-PLAN TECHNOLOGIQUE

Il est connu de déposer des filtres interférentiels, réalisés en général sous forme d'empilements de couches minces, sur des articles d'optique, tels que des lentilles ophtalmiques, afin d'obtenir un effet particulier, par exemple un traitement antireflet ou un aspect miroir.
Selon les caractéristiques physiques du filtre interférentiel utilisé, la lumière réfléchie par l'article peut avoir une certaine couleur. Lorsque ce phénomène n'est pas maîtrisé, il peut se révéler gênant, en particulier du fait de la variabilité de la couleur d'une lentille à l'autre. Dans le cas des lentilles ophtalmiques, la variabilité de couleur est par exemple problématique dans le cas de l'utilisation dans une paire de lunettes où deux lentilles distinctes sont rapprochées.
Il a été proposé dans la demande de brevet FR 2 896 045 d'utiliser les différences de caractéristiques colorimétriques en réalisant des articles d'optiques dont les revêtements antireflet présentent des couleurs de reflet résiduel d'intensités différentes.

OBJET DE L'INVENTION

Dans ce contexte, la présente invention propose un procédé de détermination de caractéristiques colorimétriques en réflexion d'un filtre interférentiel comme défini dans la revendication 1.
On détermine ainsi selon une approche objective les caractéristiques colorimétriques d'un filtre interférentiel qui aura un reflet d'une couleur perçue comme identique à celle de l'objet. Ceci est intéressant en particulier lorsque l'objet est destiné à être situé à proximité du filtre interférentiel, par exemple lorsque l'objet est une monture de lunettes et le filtre interférentiel destiné à être déposé sur un verre de lunette à monter dans la monture. Ceci est également intéressant lorsque l'on souhaite obtenir un reflet d'une couleur particulière, par exemple une couleur associée à l'image d'une entreprise ou d'une marque.
Comme expliqué plus en détail dans la suite, le procédé de détermination des caractéristiques colorimétriques est typiquement mis en œuvre au moyen d'un appareil conçu à cet effet, par exemple un ordinateur programmé à cet effet.
La caractéristique colorimétrique en réflexion est déterminée en fonction d'un facteur de réflexion souhaité pour le filtre interférentiel. En effet, le facteur de réflexion peut dans ce cas être choisi en fonction de l'application.
Le facteur de réflexion peut être le facteur de réflexion visuelle ($R_v$), encore appelé facteur moyen de réflexion lumineux, qui correspond au coefficient de réflexion sur l'ensemble du spectre visible entre 380 et 780 nm pondéré avec la courbe de sensibilité énergétique de l'œil humain, ou le facteur moyen de réflexion ($R_m$), moyenne (non pondérée) de la réflexion spectrale sur l'ensemble du spectre visible entre 400 et 700 nm. Ces facteurs sont bien connus de l'homme de l'art.
Le *"facteur moyen de réflexion"*, noté $R_m$, est défini dans la norme ISO 13666:1998 et peut être mesuré directement sur des articles obtenus par le procédé de l'invention conformément à la norme ISO 8980-4 (à un angle d'incidence inférieur à 17°, typiquement de 15°).
Le *"facteur moyen de réflexion lumineuse"*, noté $R_v$, est défini dans la norme ISO 13666:1998. Il peut être mesuré directement sur des articles obtenus par le procédé de l'invention conformément à la norme ISO 8980-4 (à un angle d'incidence inférieur à 17°, typiquement de 15°).
Les coordonnées colorimétriques de l'objet incluent un niveau de clarté de l'objet et une valeur de saturation de couleur de l'objet ; l'étape de détermination d'au moins une caractéristique colorimétrique en réflexion du filtre interférentiel comprends alors les sous-étapes suivantes :

- conversion du niveau de clarté de l'objet en un facteur de réflexion équivalent ;
- détermination d'une valeur de saturation de couleur en réflexion du filtre interférentiel en fonction du facteur de réflexion souhaité pour le filtre interférentiel, du facteur de réflexion équivalent et de la valeur de saturation de couleur de l'objet en respectant une loi d'iso-perception.

Comme expliqué dans la suite, la valeur de saturation de couleur en réflexion du filtre interférentiel ainsi déterminée permet d'obtenir une même perception de la couleur en réflexion sur le filtre interférentiel et de la couleur de l'objet, malgré une différence entre les facteurs de réflexion du filtre interférentiel et de l'objet.

En outre

- le facteur de réflexion équivalent et le facteur de réflexion souhaité peuvent être des facteurs de réflexion visuelle ;
- l'étape de détermination de la valeur de saturation de couleur en réflexion du filtre interférentiel est telle qu'un rapport entre la valeur de saturation de couleur en réflexion du filtre interférentiel et le facteur de réflexion souhaité est égal à un rapport entre la valeur de saturation de couleur de l'objet et le facteur de réflexion équivalent ;
- les coordonnées colorimétriques de l'objet peuvent comprendre une valeur de teinte de l'objet ;
- le procédé peut comprendre une étape de détermination de la valeur de teinte en réflexion du filtre interférentiel en fonction de la valeur de teinte de l'objet ;
- la valeur de teinte déterminée peut être identique à la valeur de teinte de l'objet ;
- l'étape de détermination des coordonnées colorimétriques de l'objet peut comprendre une étape de mesure à l'aide d'un colorimètre ;
- l'étape de détermination de coordonnées colorimétriques peut comprendre une étape de conversion de coordonnées colorimétriques mesurées en coordonnées polaires (incluant par exemple notamment la valeur de saturation de couleur de l'objet et la valeur de teinte de l'objet) ;
- l'objet peut avoir une couleur associée à une marque ou une entreprise
- le filtre interférentiel peut être destiné à être déposé sur un article d'optique, tel qu'une lentille ophtalmique, par exemple un verre de lunettes ;
- l'objet peut être une monture de lunettes, par exemple destinée à porter le verre de lunettes précité.

Le filtre interférentiel est par exemple déposé, en particulier dans le cas d'un traitement antireflet ou pour obtenir un aspect miroir, sur la face avant de la lentille ophtalmique, c'est-à-dire la face de la lentille ophtalmique située à l'opposé de l'œil du porteur de lunettes par rapport à la lentille ophtalmique.

L'invention propose également un procédé de dépôt d'un filtre interférentiel sur un article d'optique, caractérisé en ce qu'il comprend les étapes suivantes :

- détermination de caractéristiques colorimétriques en réflexion du filtre interférentiel par un procédé tel qu'exposé ci-dessus ;
- détermination de caractéristiques physiques du filtre interférentiel en fonction des caractéristiques colorimétriques déterminées ;
- dépôt du filtre interférentiel sur l'article d'optique avec les caractéristiques physiques déterminées.

L'étape de détermination des caractéristiques physiques peut comprendre une étape de simulation numérique du comportement physique d'un filtre interférentiel.

Le filtre interférentiel est par exemple réalisé sous forme d'un empilement interférentiel comprenant une pluralité de couches ; l'étape de détermination des caractéristiques physiques du filtre interférentiel peut alors comprendre une étape de détermination des épaisseurs respectives desdites couches

L'empilement interférentiel comprend par exemple un empilement de couches alternées d'indice de réfraction élevée et d'indice de réfraction bas.

Par couche d'indice de réfraction élevée (dit HI), on entend une couche présentant un indice de réfraction supérieur ou égal à 1,50, de préférence supérieur ou égal à 1,60, mieux supérieur ou égal à 1,8, et en particulier de 1,8 à 2,2 ; et par couche d'indice de réfraction bas (dit LI), on entend une couche présentant un indice de réfraction inférieure à 1,50, de préférence inférieure à 1,48. Sauf indication contraire, tous les indices de réfractions indiqués dans la présente demande de brevet sont exprimés pour une longueur d'onde de référence de 550 nm et à une température de 25°C.

Généralement, les couches HI à haut indice de réfraction comprennent, sans limitation, un ou plusieurs oxydes de métal, tels que $TiO_2$, $PrTiO_3$, $LaTiO_3$, $ZrO_2$, $Ta_2O_5$, $Y_2O_3$, $Ce_2O_3$, $La_2O_3$, $Dy_2O_5$, $Nd_2O_5$, $HfO_2$, $SC_2O_3$, $Pr_2O_3$ or $Al_2O_3$, et $Si_3N_4$, ou un de leurs mélanges, de préférence $ZrO_2$, $TiO_2$, ou $Pr_2O_3$, et en particulier $ZrO_2$. Les couches à haut indice de réfraction peuvent éventuellement comprendre des matériaux à bas indice de réfraction, tels que $SiO_2$. Le ou les mélanges de ces matériaux sont tels que la couche résultante présente un indice de réfraction tel que défini ci-dessus, à savoir supérieur ou égal à 1,50.

Les couches BI à bas indice de réfraction comprennent par exemple et sans limitation, $SiO_2$, $SiO_x$ avec $1 \leq x < 2$, $MgF_2$, $ZrF_4$, $Al_2O_3$, $AlF_3$, chiolite ($Na_3Al_3F_{14}$), cryolite ($Na_3[AlF_6]$), ou un de leurs mélanges, de préférence $SiO_2$ ou $SiO_2$ dopé avec $Al_2O_3$ qui permet d'accroître la température critique de l'empilement. En particulier, la couche à bas indice de réfraction comprend de préférence $SiO_2$. Egalement, le ou les mélanges de ces matériaux sont tels que la couche résultante présente un indice de réfraction tel que défini ci-dessus, à savoir inférieure à 1,50.

Lorsque le mélange $SiO_2/Al_2O_3$ est utilisé, la couche à bas indice de réfraction contient de préférence de 1 à 10%, en particulier de 1 à 8% et encore mieux de 1 à 5% en poids de $Al_2O_3$ par rapport au poids total de silice et d'alumine dans cette couche. Une proportion trop grande d'alumine peut être en effet préjudiciable à l'adhésion du revêtement.

Par exemple, des couches de $SiO_2$ dopées avec 4% ou moins d'$Al_2O_3$ en masse, ou une couche de $SiO_2$ dopée avec 8% d'$Al_2O_3$ peuvent être employées. Des mélanges $SiO_2 / Al_2O_3$ disponibles dans le commerce peuvent être utilisés, tels que le LIMA® commercialisé par UMICORE MATERIALS AG (indice de réfraction compris entre 1,48 et 1,50), ou la substance L5® commercialisée par MERCK KGaA (indice de réfraction égal à 1,48 pour une longueur d'onde de 500 nm).

Typiquement, le ou les couches à bas indice sont constituées de $SiO_2$ et le ou les couches d'indice de réfraction élevé sont constituées de $ZrO_2$.

L'empilement interférentiel comprend par exemple un même nombre de couches à haut et à bas indice de réfraction.

Généralement, l'empilement interférentiel comprend de 4 à 6 couches, typiquement 4 couches, sans prendre en compte une éventuelle sous-couche.

Dans un mode de réalisation envisageable, l'empilement interférentiel comprend, en partant de la face du substrat, une première couche d'indice de réfraction élevé en $ZrO_2$, une deuxième couche de bas indice de réfraction en $SiO_2$, une troisième couche d'indice de réfraction élevé en $ZrO_2$ et une quatrième couche de bas indice de réfraction en $SiO_2$.

Par exemple, le revêtement interférentiel comprend un empilement successif à partir du substrat d'au moins quatre couches présentant les épaisseurs physiques suivantes :

- de 100 à 120 nm pour la couche de haut indice de réfraction, comme $ZrO_2$ ;
- de 110 à 140 nm pour la couche de bas indice de réfraction, comme $SiO_2$ ;
- de 75 à 95 nm pour la couche de haut indice de réfraction, comme $ZrO_2$ ;
- de 55 à 77 nm pour la couche de bas indice de réfraction, comme $SiO_2$.

En général, le rapport (épaisseur physique totale des couches de bas indice de réfraction) / (épaisseur physique totale des couches de haut indice de réfraction) des couches de l'empilement interférentiel varie de 0,6 à 1,2.

Sauf indication contraire, toutes les épaisseurs de couches divulguées dans la présente demande sont des épaisseurs physiques, et non des épaisseurs optiques.

Par ailleurs, l'empilement interférentiel est par exemple déposé sur une sous-couche d'accrochage, par exemple en $SiO_2$, entre l'empilement de couches alternées de haut et de bas indice de réfraction et la face du substrat qui porte l'empilement.

Cette sous-couche d'accrochage a en général une épaisseur de 50 à 250 nm.

Le dépôt des couches de l'empilement interférentiel, par exemple en vue de réaliser un traitement antireflet ou un aspect miroir, peut s'effectuer par tous moyens connus tel que par évaporation, éventuellement assisté par faisceaux ioniques, par pulvérisation par faisceaux d'ions, par pulvérisation cathodique, ou par dépôt chimique en phase vapeur assisté par plasma ou par évaporation dans une enceinte sous vide.

Le dépôt des couches de l'empilement interférentiel peut également être effectué par pulvérisation cathodique haute pression.

Le substrat de la lentille ophtalmique est de préférence en verre organique, par exemple une matière plastique thermoplastique ou thermodurcissable.

Parmi les matériaux thermoplastiques convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC), les polyuréthanes (PU), les poly(thiouréthanes), les (co)polymères d'allylcarbonates de polyols, les copolymères thermoplastiques éthylène/acétate de vinyle, les polyesters tels que le poly(téréphtalate d'éthylène) (PET) ou le poly(téréphtalate de butylène) (PBT), les polyépisulfures, les polyépoxydes, les copolymères polycarbonates/polyesters, les copolymères de cyclo-oléfines tels que les copolymères éthylène/norbornène ou éthylène/cyclopentadiène et leurs combinaisons.

Par (co)polymère, on entend un copolymère ou un homopolymère. Par (méth)acrylate, on entend un acrylate ou un méthacrylate. Par polycarbonate (PC), on entend au sens de la présente invention aussi bien les homopolycarbonates que les copolycarbonates et les copolycarbonates séquencés.

Les substrats particulièrement recommandés sont les substrats obtenus par (co)polymérisation du bis allyl carbonate du diéthylèneglycol, vendu, par exemple, sous la dénomination commerciale CR-39® par la société PPG Industries (lentilles ORMA® ESSILOR), ou par polymérisation des monomères thio(méth)acryliques, tels que ceux décrits dans la demande de brevet français FR 2734827. Les substrats peuvent être obtenus par polymérisation de mélanges des monomères ci-dessus, ou peuvent encore comprendre des mélanges de ces polymères et (co)polymères.

D'autres substrats utilisables sont les polycarbonates.

L'empilement interférentiel peut être déposé sur un substrat nu, c'est-à-dire dont les faces principales ne comportent aucun revêtement, ou sur un substrat déjà revêtu, c'est-à-dire dont les faces principales comportent un ou plusieurs revêtements fonctionnels.

En effet, un revêtement ou une couche qui est "*sur*" le substrat ou qui a été déposé "*sur*" le substrat est défini comme un revêtement qui :

(i) est positionné au-dessus d'une des faces principales du substrat nu,

(ii) n'est pas nécessairement en contact avec le substrat (bien que préférentiellement il le soit), c'est-à-dire qu'un ou plusieurs revêtements intermédiaires, généralement fonctionnels, peuvent être disposés entre le substrat nu et le revêtement en question, et

(iii) ne recouvre pas nécessairement complètement la face principale du substrat (bien que préférentiellement, il le recouvre).

Les revêtements fonctionnels sont bien connus et comprennent à titre d'exemple un primaire pour l'adhérence et/ou la résistance au choc et/ou un revêtement résistant à l'abrasion et/ou un revêtement polarisant et/ou un revêtement photochromique.

L'invention propose enfin un ensemble formé d'un filtre interférentiel et d'un objet ayant une couleur représentée par des coordonnées colorimétriques déterminées, caractérisé en ce qu'au moins une caractéristique colorimétrique en réflexion du filtre interférentiel et les coordonnées colorimétriques de l'objet respectent la loi d'iso-perception mentionnée ci-dessus.

L'objet peut être physiquement proche de la lentille ophtalmique comme cela sera décrit ci-après ou éloigné de celle-ci. Pour ce dernier cas, un exemple est le cas d'une marque notoire présentant une couleur spécifique, reconnaissable facilement.

Comme déjà indiqué, le filtre interférentiel peut être déposé sur un verre de lunettes et l'objet peut alors être une monture de lunettes portant ledit verre.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée. Sur les dessins annexés :

- la figure 1 représente un exemple de contexte dans lequel peut être mise en œuvre l'invention ;
- la figure 2 représente les étapes principales d'un procédé de dépôt d'un filtre interférentiel sur un article d'optique conforme aux enseignements de l'invention ;
- la figure 3 représente les étapes principales d'un procédé de détermination des caractéristiques colorimétriques en réflexion d'un tel filtre interférentiel, conformément aux enseignements de l'invention.

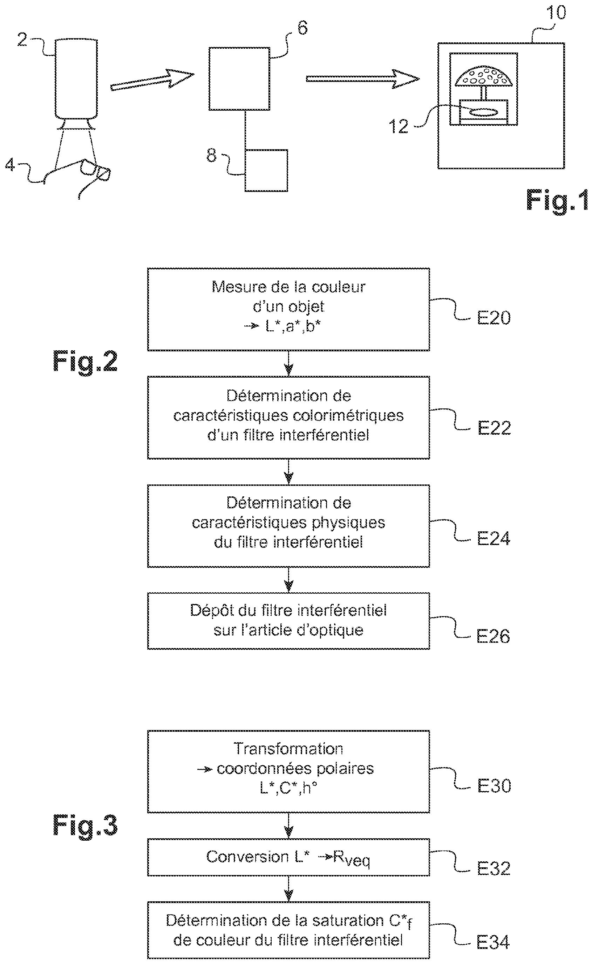

Sur la figure 1, on a schématiquement représenté un objet 4 (ici une monture de lunettes) et une lentille ophtalmique 12 (ici un verre destiné à être monté sur la lunette) sur laquelle on souhaite déposer un filtre interférentiel (par exemple dans un but de traitement antireflet ou pour obtenir un aspect miroir) ayant une couleur en réflexion perçue par un observateur comme identique à la couleur de l'objet.

Les procédés décrits ci-dessous en référence aux figures 2 et 3 sont notamment mis en œuvre au moyen d'ordinateur programmé à cet effet, qui comprend un processeur 6 (par exemple un microprocesseur) et des moyens de mémorisation 8 (par exemple une mémoire à semi-conducteur ou, en variante, un disque dur).

Les moyens de mémorisation 8 stockent notamment un programme d'ordinateur adapté, lorsqu'il est exécuté par le processeur 6, à mettre en œuvre certaines étapes des procédés des figures 2 et 3 ; les moyens de mémorisation 8 stockent également des données utilisées dans le cadre de la mise en œuvre de ces procédés, comme expliqué ci-après.

D'autres éléments représentés en figure 1 sont présentés dans la suite.

On décrit à présent en référence à la figure 2 un exemple de procédé de dépôt d'un filtre interférentiel sur un article d'optique (ici la lentille ophtalmique 12).

Ce procédé débute par une étape E20 au cours de laquelle on mesure certaines caractéristiques colorimétriques de l'objet 4 à l'aide d'un appareil de mesure de la couleur, par exemple un colorimètre 2.

On utilise ici un colorimètre 2 du type *"Color Reader"* CR-10 fourni par Konica Minolta® qui mesure les coordonnées colorimétriques L*, a*, b* de l'objet dans l'espace colorimétrique L*a*b* défini par la Commission Internationale de l'Éclairage (CIE), pour l'observateur standard à 10° avec l'illuminant standard D65, tous deux également définis par la CIE.

Comme déjà indiqué, l'objet est par exemple une monture 4 destinée à recevoir la lentille ophtalmique, ou une partie colorée de cette monture. En variante, l'objet pourrait être un logo d'une société ou une marque (ou une partie colorée d'un tel logo ou d'une telle marque), par exemple tel(le) que représenté(e) sur un support imprimé. Selon un autre mode de réalisation envisageable, l'objet pourrait être une plaque de couleur (la couleur de la plaque correspondant par exemple à une teinte Pantone).

Dans l'exemple décrit, la monture 4 est par exemple de couleur rouge et la mesure effectuée par le colorimètre 2 donne les coordonnées colorimétriques suivantes pour la couleur de la monture 4 : $L^* = 43,4$ ; $a^* = 54$ ; $b^* = 26$.

Le procédé de la figure 1 se poursuit par une étape E22 de détermination des caractéristiques colorimétriques du filtre interférentiel, ici en fonction des coordonnées colorimétriques de l'objet, telle que mesurée à l'étape E20. Pour ce faire, les coordonnées colorimétriques mesurées sont par exemple transmises du colorimètre 2 au processeur 6 par des moyens d'échange (par exemple une connexion filaire ou des moyens de communication sans fil).

Cette étape de détermination E22 est réalisée par le processeur 6, comme décrit en détail ci-dessous en référence à la figure 3, en respectant une loi d'iso-perception de sorte que le filtre interférentiel ait un reflet d'une couleur perçue comme identique à celle de l'objet 4.

Dans le cas de la monture mentionné ci-dessus, et si l'on souhaite obtenir un traitement antireflet caractérisé par un facteur de réflexion visuelle $R_{Vf}$ de 1% (voir ci-dessous la description de la figure 3 à ce sujet), on obtient comme expliqué plus bas une valeur de saturation $C^*_f = 4,5$ et une valeur de teinte $h^*_f = 26$, qui caractérisent la couleur en réflexion du filtre interférentiel.

On détermine alors à l'étape E24 des caractéristiques physiques du filtre interférentiel (typiquement le nombre, l'épaisseur et le matériau de couches minces formant le filtre interférentiel) qui permettent d'obtenir les caractéristiques colorimétriques déterminées à l'étape E22.

Cette étape E24 de détermination des caractéristiques physiques est par exemple réalisée en mettant en œuvre, au moyen du processeur 6, une simulation numérique du comportement physique du filtre interférentiel. Cette simulation numérique est réalisée par l'exécution, sur le processeur 6, d'un logiciel de simulation, par exemple le logiciel "The *Essential Macleod*".

Dans le cas du traitement antireflet mentionné ci-dessus, et si l'on utilise par exemple un empilement interférentiel formé d'une alternance de couches de $ZrO_2$ et de $SiO_2$, avec 4 couches au total, l'étape E24 donne les valeurs suivantes pour l'épaisseur des couches (afin d'obtenir un filtre interférentiel ayant les caractéristiques colorimétriques de l'exemple ci-dessus), à partir du substrat :

$1^{ère}$ couche ($[ZrO_2]$) : [23 nm] ; $2^{ème}$ couche ($[SiO_2]$) : [19 nm] ; $3^{ème}$ couche ($[ZrO_2]$) : [85 nm] ; $4^{ème}$ couche ($[SiO_2]$) : [71nm].

On dépose enfin, sur la lentille ophtalmique 12 et au moyen d'un équipement de dépôt sous vide 10, des couches minces ayant les caractéristiques physiques déterminées, ce qui permet d'obtenir un filtre interférentiel (ici de traitement antireflet) dont la couleur en réflexion est perçue comme identique à celle de l'objet 4 (en l'occurrence la monture destinée à recevoir cette lentille). Pour ce faire, le fonctionnement de l'équipement de dépôt sous vide 10 est par exemple piloté par le processeur 6.

On décrit à présent en référence à la figure 3 un exemple de procédé de détermination des caractéristiques colorimétriques en réflexion d'un filtre interférentiel, au moyen duquel est mise en œuvre l'étape E22 mentionnée ci-dessus. Ce procédé est par exemple mis en œuvre par le processeur 6 du fait de l'exécution d'instructions d'un programme d'ordinateur conçu à cet effet.

Ce procédé débute à l'étape E30 par la transformation des coordonnées colorimétriques mesurées $L^*$, $a^*$, $b^*$ en coordonnées polaires $L^*$, $C^*$, $h°$.

On définit ainsi la teinte (en anglais *"hue"*) $h°$ et la saturation (ou chroma) $C^*$ de la couleur mesurée, avec $h° = (180/\pi).arctan(b^*/a^*)$ et $C^* = (a^{*2}+b^{*2})^{1/2}$ (soit dans l'exemple mentionné plus haut $h° = 26°$ et $C^* = 59,93$).

On remarque que la coordonnée $L^*$ (qui représente la clarté de la couleur de l'objet) est utilisée dans les deux représentations et n'est donc pas modifiée par l'étape E30.

On procède alors à l'étape E32 à la conversion de cette valeur de clarté $L^*$ en facteur de réflexion visuelle équivalent $R_{veq}$.

Le facteur de réflexion visuelle correspond par définition à la coordonnée Y de l'espace colorimétrique XYZ défini par la CIE. La valeur de clarté $L^*$ de l'objet et le facteur de réflexion visuelle équivalent $R_{Veq}$ sont donc liés par les relations suivantes (qui sont basées sur les formules de passage de coordonnées dans l'espace XYZ aux coordonnées dans l'espace $L^*a^*b^*$) :

$$L^* = 116.(R_{Veq}/Y_r)^{1/3} - 16 \text{ si } R_V/Y_r > 0.008856 \text{ ;}$$

$L^* = 903.3 \cdot R_{Veq}/Y_r$ sinon, où $Y_r$ est la coordonnée Y dans l'espace XYZ de l'illuminant utilisé pour construire l'espace L*a*b* concerné.

Lorsque l'on utilise l'illuminant standard D65 comme c'est le cas ici comme déjà indiqué, ces formules s'écrivent :

$$L^* = 25.R_{Veq}^{1/3} \cdot 16 \text{ si } R_{Veq} > 0,9\% \text{ ;}$$

$$L^* = 9.R_{Veq} \text{ sinon.}$$

Dans l'exemple mentionné ci-dessus où $L^* = 43,4$, on obtient $R_{Veq} = 13, 41\%$.

On a ainsi pu déterminer des caractéristiques représentatives de la couleur de l'objet (dans l'exemple décrit, de la monture 4) : le facteur de réflexion visuelle équivalent $R_{Veq}$, la saturation C* et la teinte h°.

On propose de déterminer les caractéristiques colorimétriques en réflexion du filtre interférentiel sur la base de ces caractéristiques représentatives de la couleur de l'objet, en respectant une loi d'iso-perception de la couleur.

Dans l'exemple décrit ici, le facteur de réflexion visuelle $R_{Vf}$ du filtre interférentiel est prédéfini (par exemple par saisie sur des moyens de saisie associés au processeur 6 et mémorisation dans les moyens de mémorisation 8) en fonction de l'application visée. Dans le cas d'une application de traitement antireflet, on sélectionne par exemple une valeur $R_{Vf}$ inférieure à 2,5 %, typiquement comprise entre 0,1% et 2,5%, ici une valeur $R_{Vf} = 1\%$. En variante, si l'application visée était par exemple un effet miroir, le facteur de réflexion visuelle prédéfini $R_{Vf}$ pourrait être compris par exemple entre 10 et 80%, préférentiellement entre 40 et 60%.

Afin d'obtenir une teinte identique pour l'objet et le rayonnement réfléchi par le filtre interférentiel, la valeur de teinte $h°_f$ en réflexion du filtre interférentiel est déterminée comme égal à la valeur de teinte de l'objet h°, tele qu'obtenue à l'étape E30.

Concernant la saturation, les inventeurs ont remarqué que le maintien d'une valeur de saturation donnée ne permettait pas de conserver une perception constante de la couleur lorsque le facteur de réflexion visuelle varie. On constate au contraire que, pour une teinte et une saturation données, plus le facteur de réflexion visuelle augmente, plus la couleur représentée par ce facteur de réflexion visuelle, la saturation et la teinte données est perçue comme achromatique.

On propose donc ici de déterminer la saturation de couleur en réflexion $C^*_f$ du filtre interférentiel sur la base du facteur de réflexion visuelle prédéfini $R_{Vf}$ pour le filtre interférentiel, du facteur de réflexion équivalent $R_{Veq}$ et de la valeur de saturation C* de l'objet déterminés à l'étape E30 en respectant une loi d'iso-perception, telle que le rapport du facteur de réflexion visuelle $R_{Veq}$ et de la saturation C* (caractéristiques de l'objet) soit identique au rapport du facteur de réflexion visuelle $R_{Vf}$ et de la saturation $C^*_f$ (caractéristiques du filtre interférentiel).

Autrement dit, la saturation de couleur en réflexion $C^*_f$ du filtre interférentiel vaut :

$$C^*_f = C^* \cdot R_{Vf} / R_{Veq}.$$

Les inventeurs ont en effet constaté que le maintien d'un rapport $R_V/C^*$ constant permet de maintenir une certaine perception de la couleur pour l'observateur.

Dans l'exemple mentionné ci-dessus, on obtient ainsi : $C^*_f = 4,5$.

On a ainsi pu déterminer des caractéristiques représentatives de la couleur en réflexion du filtre interférentiel telles que cette couleur en réflexion soit perçue comme la même que celle de l'objet (dans l'exemple décrit, de la monture 4) : le facteur de réflexion visuelle $R_{Vf}$ (ici sélectionné par l'utilisateur), la saturation $C^*_f$ et la teinte $h°_f$.

**Revendications**

1. Procédé de détermination de caractéristiques colorimétriques en réflexion d'un filtre interférentiel, **caractérisé en ce qu'**il comprend les étapes suivantes :

   - détermination (E20, E30) de coordonnées colorimétriques d'un objet (4) ;
   - détermination (E32, E34) d'au moins une caractéristique colorimétrique ($C^*_f$) en réflexion du filtre interférentiel en fonction des coordonnées colorimétriques déterminées en respectant une foi d'iso-perception, dans lequel la caractéristique colorimétrique ($C^*_f$) en réflexion est déterminée en fonction d'un facteur de réflexion souhaité ($R_{Vf}$) pour le filtre interférentiel, dans lequel les coordonnées colorimétriques de l'objet incluent un niveau de clarté (L*) de l'objet (4) et une valeur de saturation (C*) de couleur de l'objet (4), et dans lequel l'étape de détermination d'au moins une caractéristique colorimétrique (C*$_f$) en réflexion du filtre interférentiel comprend les sous-étapes suivantes :

- conversion (E32) du niveau de clarté (L*) de l'objet (4) en un facteur de réflexion équivalent (R$_{Veq}$) ;
- détermination (E34) d'une valeur de saturation (C*$_f$) de couleur en réflexion du filtre interférentiel en fonction du facteur de réflexion souhaité (R$_{Vf}$) pour le filtre interférentiel, du facteur de réflexion équivalent (R$_{Veq}$) et de la valeur de saturation de couleur (C*) de l'objet (4) en respectant la loi d'iso-perception telle que le rapport entre la valeur de saturation (C*$_f$) de couleur en réflexion du filtre interférentiel et le facteur de réflexion souhaité (R$_{Vf}$) est égal au rapport entre la valeur de saturation (C*) de couleur de l'objet (4) et le facteur de réflexion équivalent (R$_{Veq}$).

2. Procédé selon la revendication 1, dans lequel le facteur de réflexion équivalent (R$_{Veq}$) et le facteur de réflexion souhaité (R$_{Vf}$) sont des facteurs de réflexion visuelle.

3. Procédé selon l'une des revendications 1 à 2, dans lequel les coordonnées colorimétriques de l'objet comprennent une valeur de teinte (h°) de l'objet (4), le procédé comprenant une étape de détermination de la valeur de teinte en réflexion du filtre interférentiel en fonction de la valeur de teinte (h°) de l'objet (4).

4. Procédé selon la revendication 3, dans lequel la valeur de teinte déterminée est identique à la valeur de teinte (h°) de l'objet (4).

5. Procédé selon l'une des revendications 1 à 4, dans lequel l'étape de détermination des coordonnées colorimétriques de l'objet comprend une étape (E20) de mesure à l'aide d'un colorimètre (2).

6. Procédé selon la revendication 5, dans lequel l'étape de détermination de coordonnées colorimétriques comprend une étape (E30) de conversion de coordonnées colorimétriques mesurées (L*, a*, b*) en coordonnées polaires (L*, C*, h°).

7. Procédé selon l'une des revendications 1 à 6, dans lequel le filtre interférentiel est destiné à être déposer sur une lentille ophtalmique (12) et dans lequel l'objet (4) est une monture de lunettes.

8. Procédé de dépôt d'un filtre interférentiel sur un article d'optique (12), **caractérisé en ce qu'**il comprend les étapes suivantes :

- détermination (E20, E22) de caractéristiques colorimétriques en réflexion du filtre interférentiel par un procédé selon l'une des revendications 1 à 7 ;
- détermination (E24) de caractéristiques physiques du filtre interférentiel en fonction des caractéristiques colorimétriques déterminées ;
- dépôt (E26) du filtre interférentiel sur l'article d'optique (12) avec les caractéristiques physiques déterminées.

9. Procédé selon la revendication 8, dans lequel l'étape de détermination (E24) des caractéristiques physiques comprend une étape de simulation numérique du comportement physique d'un filtre interférentiel.

10. Procédé selon la revendication 8 ou 9, dans lequel le filtre interférentiel est réalisé sous forme d'un empilement interférentiel comprenant une pluralité de couches et dans lequel l'étape de détermination (E24) des caractéristiques physiques du filtre interférentiel comprend une étape de détermination des épaisseurs respectives desdites couches.

11. Ensemble formé d'un filtre interférentiel et d'un objet (4) ayant une couleur en réflexion représentée par des coordonnées colorimétriques déterminées incluant un niveau de clarté (L*) de l'objet (4) et une valeur de saturation (C*) de couleur de l'objet (4), **caractérisé en ce que** le filtre interférentiel est configuré de manière à ce qu'au moins une caractéristique colorimétrique (C*$_f$) en réflexion du filtre interférentiel est déterminée en fonction d'un facteur de réflexion souhaité (R$_{Vf}$) pour le filtre interférentiel et respecte avec les coordonnées colorimétriques de l'obje une loi d'iso-perception telle que le rapport entre la valeur de saturation (C*$_f$) de couleur en réflexion du filtre interférentiel et le facteur de réflexion souhaité (R$_{Vf}$) du filtre interférentiel est égal au rapport entre la valeur de saturation (C*) de couleur de l'objet (4) et un facteur de réflexion équivalent (R$_{Veq}$) déterminé à partir du niveau de clarté (L*) de l'objet (4).

12. Ensemble selon la revendication 11, dans lequel le filtre interférentiel est déposé sur un verre de lunettes et dans lequel l'objet est une monture de lunettes portant ledit verre.

**Patentansprüche**

1.  Verfahren zur Bestimmung kolorimetrischer Eigenschaften in Reflexion eines Interferenzfilters, **dadurch gekennzeichnet, dass** es die folgenden Schritte umfasst:

    Bestimmen (E20, E30) kolorimetrischer Koordinaten eines Objekts (4);
    Bestimmen (E32, E34) wenigstens einer kolorimetrischen Eigenschaft ($C^*_f$) in Reflexion des Interferenzfilters in Abhängigkeit von den bestimmten kolorimetrischen Koordinaten unter Einhaltung eines Isoperzeptionsgesetzes,

    wobei die kolorimetrische Eigenschaft ($C^*_f$) in Reflexion in Abhängigkeit von einem gewünschten Reflexionsfaktor ($R_{Vf}$) für den Interferenzfilter bestimmt wird,
    wobei die kolorimetrischen Koordinaten des Objekts ein Helligkeitsniveau (L*) des Objekts (4) und einen Farbsättigungswert (C*) des Objekts (4) enthalten und wobei der Schritt des Bestimmens wenigstens einer kolorimetrischen Eigenschaft ($C^*_f$) in Reflexion des Interferenzfilters die folgenden Unterschritte umfasst:

    Umwandeln (E32) des Helligkeitsniveaus (L*) des Objekts (4) in einen äquivalenten Reflexionsfaktor ($R_{Veq}$);
    - Bestimmen (E34) eines Farbsättigungswerts ($C^*_f$) in Reflexion des Interferenzfilters in Abhängigkeit von dem gewünschten Reflexionsfaktor ($R_{Vf}$) für den Interferenzfilter, dem äquivalenten Reflexionsfaktor ($R_{Veq}$) und dem Farbsättigungswert (C*) des Objekts (4) unter Einhaltung des Isoperzeptionsgesetzes, so dass das Verhältnis zwischen dem Farbsättigungswert ($C^*_f$) in Reflexion des Interferenzfilters und dem gewünschten Reflexionsfaktor ($R_{Vf}$) gleich dem Verhältnis zwischen dem Farbsättigungswert (C*) des Objekts (4) und dem äquivalenten Reflexionsfaktor ($R_{Veq}$) ist.

2.  Verfahren nach Anspruch 1, wobei der äquivalente Reflexionsfaktor ($R_{Veq}$) und der gewünschte Reflexionsfaktor ($R_{Vf}$) Faktoren visueller Reflexion sind.

3.  Verfahren nach einem der Ansprüche 1 bis 2, wobei die kolorimetrischen Koordinaten des Objekts einen Farbtonwert (h°) des Objekts (4) umfassen, wobei das Verfahren einen Schritt des Bestimmens des Farbtonwerts in Reflexion des Interferenzfilters in Abhängigkeit von dem Farbtonwert (h°) des Objekts (4) umfasst.

4.  Verfahren nach Anspruch 3, wobei der bestimmte Farbtonwert mit dem Farbtonwert (h°) des Objekts (4) identisch ist.

5.  Verfahren nach einem der Ansprüche 1 bis 4, wobei der Schritt des Bestimmens der kolorimetrischen Koordinaten des Objekts einen Schritt (E20) des Messens mithilfe eines Kolorimeters (2) umfasst.

6.  Verfahren nach Anspruch 5, wobei der Schritt des Bestimmens von kolorimetrischen Koordinaten einen Schritt (E30) des Umwandelns gemessener kolorimetrischer Koordinaten (L*, a*, b*) in polare Koordinaten (L*, C*, h°) umfasst.

7.  Verfahren nach einem der Ansprüche 1 bis 6, wobei der Interferenzfilter dazu bestimmt ist, auf einer ophthalmischen Linse (12) aufgebracht zu sein, und das Objekt (4) ein Brillengestell ist.

8.  Verfahren zur Aufbringung eines Interferenzfilters auf einen Optikartikel (12), **dadurch gekennzeichnet, dass** es die folgenden Schritte umfasst:

    Bestimmen (E20, E22) kolorimetrischer Eigenschaften in Reflexion des Interferenzfilters durch ein Verfahren nach einem der Ansprüche 1 bis 7;
    - Bestimmen (E24) physikalischer Eigenschaften des Interferenzfilters in Abhängigkeit von den bestimmten kolorimetrischen Eigenschaften;
    - Aufbringen (E26) des Interferenzfilters auf den Optikartikel (12) mit den bestimmten physikalischen Eigenschaften.

9.  Verfahren nach Anspruch 8, wobei der Schritt des Bestimmens (E24) physikalischer Eigenschaften einen Schritt des digitalen Simulierens des physikalischen Verhaltens eines Interferenzfilters umfasst.

**10.** Verfahren nach Anspruch 8 oder 9, wobei der Interferenzfilter in Form eines Interferenzstapels ausgebildet ist, der eine Mehrzahl von Schichten umfasst, und wobei der Schritt des Bestimmens (E24) der physikalischen Eigenschaften des Interferenzfilters einen Schritt des Bestimmens der jeweiligen Dicken der Schichten umfasst.

**11.** Anordnung aus einem Interferenzfilter und einem Objekt (4) mit einer Farbe in Reflexion, die von bestimmten kolorimetrischen Koordinaten dargestellt ist, die ein Helligkeitsniveau (L\*) des Objekts (4) und einen Farbsättigungswert (C\*) des Objekts (4) enthalten, **dadurch gekennzeichnet, dass** der Interferenzfilter so ausgebildet ist, dass wenigstens eine kolorimetrische Eigenschaft (C\*$_f$) in Reflexion des Interferenzfilters in Abhängigkeit von einem gewünschten Reflexionsfaktor (R$_{Vf}$) für den Interferenzfilter bestimmt ist und mit den kolorimetrischen Koordinaten des Objekts ein Isoperzeptionsgesetz einhält, so dass das Verhältnis zwischen dem Farbsättigungswert (C\*$_f$) in Reflexion des Interferenzfilters und dem gewünschten Reflexionsfaktor (R$_{Vf}$) des Interferenzfilters gleich dem Verhältnis zwischen dem Farbsättigungswert (C\*) des Objekts (4) und einem äquivalenten Reflexionsfaktor (R$_{Veq}$) ist, der anhand des Helligkeitsniveaus (L\*) des Objekts (4) bestimmt wird.

**12.** Anordnung nach Anspruch 11, wobei der Interferenzfilter auf ein Brillenglas aufgebracht ist und wobei das Objekt ein Brillengestell ist, das das Glas trägt.

**Claims**

**1.** Method for determining colorimetric characteristics in reflection of an interference filter, **characterised in that** it comprises the following steps:

- determining (E20, E30) colorimetric coordinates of an object (4);
- determining (E32, E34) at least one colorimetric characteristic (C\*$_f$) in reflection of the interference filter depending on the determined colorimetric coordinates while respecting an so-perception law.

wherein the colorimetric characteristic (C\*$_f$) in reflection is determined depending on a reflectance (R$_{Vf}$) desired for the interference filter,
wherein the colorimetric coordinates of the object include a lightness level (L\*) of the object (4) and a colour saturation value (C\*) of the object (4), and wherein the step of determining at least one colorimetric characteristic (C\*$_f$) in reflection of the interference filter comprises the following substeps:

- converting (E32) the lightness level (L\*) of the object (4) into an equivalent reflectance (R$_{Veq}$);
- determining (E34) a colour saturation value (C\*$_f$) in reflection of the interference filter depending on the reflectance (R$_{Vf}$) desired for the interference filter, on the equivalent reflectance (R$_{Veq}$) and on the colour saturation value (C\*) of the object (4) while respecting the iso-perception law such that the ratio of the colour saturation value (C\*$_f$) in reflection of the interference filter to the desired reflectance (R$_{Vf}$) is equal to the ratio of the colour saturation value (C\*) of the object (4) to the equivalent reflectance (R$_{Veq}$).

**2.** Method according to claim 1, wherein the equivalent reflectance (R$_{Veq}$) and the desired reflectance (R$_{Vf}$) are visual reflectances.

**3.** Method according to one of claims 1 to 2, wherein the colorimetric coordinates of the object comprise a hue value (h°) of the object (4), the method comprising a step of determining the hue value in reflection of the interference filter depending on the hue value (h°) of the object (4).

**4.** Method according to claim 3, wherein the determined hue value is identical to the hue value (h°) of the object (4).

**5.** Method according to one of claims 1 to 4. wherein the step of determining the colorimetric coordinates of the object comprises a step (E20) of measurement using a colorimeter (2)

**6.** Method according to claim 5, wherein the step of determining colorimetric coordinates comprises a step (E30) of converting measured colorimetric coordinates (L\*, a\*, b\*) into polar coordinates (L\*, C\*, h°).

**7.** Method according to one of claims 1 to 6, wherein the interference filter is intended to be deposited on an ophthalmic lens (12) and wherein the object (4) is a spectacle frame.

8. Method for depositing an interference filter on an optical article (12), **characterised in that** it comprises the following steps:

- determining (E20, E22) colorimetric characteristics in reflection of the interference filter using a method according to one of claims 1 to 7;
- determining (E24) physical characteristics of the interference filter depending on the determined colorimetric characteristics;
- depositing (E26) the interference filter on the optical article (12) with the determined physical characteristics.

9. Method according to claim 8, wherein the step of determining (E24) the physical characteristics comprises a step of simulating numerically the physical behaviour of an interference filter.

10. Method according to claim 8 or 9, wherein the interference filter is produced in the form of an interference stack comprising a plurality of layers and wherein the step of determining (E24) the physical characteristics of the interference filter comprises a step of determining the respective thicknesses of said layers.

11. Assembly formed from an interference filter and an object (4) having a colour in reflection represented by determined colorimetric coordinates including a lightness level (L*) of the object (4) and a colour saturation value (C*) of the object (4), **characterized in that** the interference filter is configured such that at least one colorimetric characteristic $(C^*_f)$ in reflection of the interference filter is determined depending on a reflectance $(R_{Vf})$ desired for the interference filter and respects with the colorimetric coordinates of the object an iso-perception law such that the ratio of the colour saturation value $(C^*_f)$ in reflection of the interference filter to the desired reflectance $(R_{Vf})$ of the interference filter is equal to the ratio of the colour saturation value (C*) of the object (4) to an equivalent reflectance $(R_{Veq})$ determined based on the lightness level (L*) of the object (4).

12. Assembly according to claim 11, wherein the interference filter is deposited on a spectacle eyeglass and wherein the object is a spectacle frame carrying said eyeglass.

**Fig.1**

**Fig.2**

| |
|---|
| Mesure de la couleur d'un objet → L*,a*,b* |

E20

| |
|---|
| Détermination de caractéristiques colorimétriques d'un filtre interférentiel |

E22

| |
|---|
| Détermination de caractéristiques physiques du filtre interférentiel |

E24

| |
|---|
| Dépôt du filtre interférentiel sur l'article d'optique |

E26

**Fig.3**

| |
|---|
| Transformation → coordonnées polaires L*,C*,h° |

E30

| |
|---|
| Conversion L* → $R_{veq}$ |

E32

| |
|---|
| Détermination de la saturation $C^*_f$ de couleur du filtre interférentiel |

E34

**RÉFÉRENCES CITÉES DANS LA DESCRIPTION**

**Documents brevets cités dans la description**

- FR 2896045
- FR 2734827